(19) Europäisches Patentamt / European Patent Office / Office européen des brevets

(11) **EP 2 659 579 B1**

(12) **FASCICULE DE BREVET EUROPEEN**

(45) Date de publication et mention
de la délivrance du brevet:
**06.09.2017 Bulletin 2017/36**

(21) Numéro de dépôt: **11785703.7**

(22) Date de dépôt: **23.11.2011**

(51) Int Cl.:
***H02M 7/5387*** *(2007.01)*     ***H02P 27/08*** *(2006.01)*

(86) Numéro de dépôt international:
**PCT/EP2011/070785**

(87) Numéro de publication internationale:
**WO 2012/089426 (05.07.2012 Gazette 2012/27)**

(54) **SYSTEME DE COMMANDE D'UN ONDULEUR DE TENSION ALIMENTANT UN MOTEUR ELECTRIQUE MULTIPHASE DE VEHICULE AUTOMOBILE**

SYSTEM ZUR STEUERUNG EINES SPANNUNGSWECHSELRICHTERS FÜR DIE STROMVERSORGUNG EINES MEHRPHASIGEN ELEKTRISCHEN MOTORS EINES KRAFTFAHRZEUGS

SYSTEM FOR CONTROLLING A VOLTAGE INVERTER SUPPLYING POWER TO A MULTIPHASE ELECTRICAL MOTOR OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2010 FR 1061315**

(43) Date de publication de la demande:
**06.11.2013 Bulletin 2013/45**

(73) Titulaire: **Renault S.A.S.**
**92100 Boulogne-Billancourt (FR)**

(72) Inventeurs:
• **CREGUT, Samuel**
  **F-78470 Saint-Remy-Les-Chevreuse (FR)**
• **MARSILIA, Marco**
  **F-92100 Boulogne Billancourt (FR)**

(74) Mandataire: **Rougemont, Bernard**
**Renault Technocentre**
**Département Propriété Intellectuelle**
**Sce 00267 TCR GRA 2 36**
**1 Avenue du Golf**
**78288 Guyancourt Cedex (FR)**

(56) Documents cités:
**EP-A1- 0 128 796         US-A1- 2004 232 875**
**US-A1- 2010 079 192**

• **YEN-SHIN LAI ET AL: "Novel pulse-width modulation technique with loss reduction for small power brushless dc motor drives", CONFERENCE RECORD OF THE 2002 IEEE INDUSTRY APPLICATIONS CONFERENCE : 37TH IAS ANNUAL MEETING ; 13 - 18 OCTOBER 2002, PITTSBURGH, PENNSYLVANIA, USA; [CONFERENCE RECORD OF THE IEEE INDUSTRY APPLICATIONS CONFERENCE. IAS ANNUAL MEETING], IEEE SERVICE CE, vol. 3, 13 octobre 2002 (2002-10-13), pages 2057-2064, XP010610160, DOI: 10.1109/IAS.2002.1043815 ISBN: 978-0-7803-7420-1**

**Description**

L'invention a pour domaine technique le contrôle des moteurs électriques multiphasés pour véhicule automobile.

Les machines à traction des véhicules électriques sont alimentées électriquement par des systèmes à transistors chargés de réaliser des tensions alternatives simples à partir d'une tension continue. Ce système d'électronique de puissance est appelé onduleur de tension. La commande des interrupteurs compris dans l'onduleur de tension est réalisée par des signaux modulés en largeur d'impulsion (MLI en français, ou PWM pour « pulse width modulation » en anglais).La modulation en largeur d'impulsion consiste à générer un train d'impulsion à fréquence fixe et à largeur variable, dont la valeur moyenne correspond à la valeur de la consigne appliquée.

Il existe différentes méthodes classiquement utilisées pour obtenir une telle modulation.

La méthode scalaire (sinusoidal method en anglais) permet de fournir une modulation MLI avec une tension nulle ou très faible.

L'injection d'un harmonique de troisième ordre permet d'augmenter l'amplitude de l'harmonique principal. Cette méthode a été développée en priorité pour augmenter la zone linéaire de tension. Elle présente cependant l'inconvénient d'augmenter la valeur efficace du courant donc les pertes, à la fois dans l'électronique de puissance et dans le moteur.

La commande vectorielle (Space Vector Modulation en langue anglaise) a été développée pour augmenter la zone linéaire de tension, tout en évitant l'augmentation de courant apportée par l'injection d'harmonique.

Les méthodes discontinues permettent de minimiser les pertes par commutation dans les transistors tout en conservant une bonne utilisation de la tension disponible et une limitation du courant. Leur principal inconvénient est d'être difficile à mettre en oeuvre et difficilement compatible avec les limites réelles de rapport cyclique. En effet, un onduleur de tension, du fait de la dispersion des temps de commutation des transistors, doit comprendre un temps mort afin de limiter les valeurs de rapport cyclique.

Le document US 2009/0179608 décrit un procédé de commande d'un onduleur de tension alimentant un moteur électrique d'un véhicule automobile. La méthode décrite prend en compte des contraintes de zone interdites des rapports cycliques dans le cas d'une fréquence de découpage pouvant être variable. Cette méthode est du type à commande vectorielle. Le document US 2010/0079192 divulgue un système de commande d'un onduleur de tension pour alimenter un moteur électrique multiphasé, comprenant un moyen d'élaboration des valeurs de tensions d'alimentation de chaque phase du moteur électrique, ainsi que d'une valeur d'amplitude des tensions d'alimentation, le système comprenant un moyen de détermination de collage de phase et un moyen de commande du collage de phase coopérant ensemble afin de commander l'émission à destination de l'onduleur de tension de rapports cycliques élaborés par des moyens de détermination des rapports cycliques, en fonction des valeurs de tensions d'alimentation de chaque phase du moteur électrique, ainsi que de la valeur d'amplitude des tensions d'alimentation. L'invention a pour objet un système de commande apte à minimiser les pertes par commutation dans les transistors de l'onduleur de tension tout en conservant une bonne utilisation de la tension disponible et une limitation du courant et sans imposer un temps mort à l'onduleur de tension.

Dans un mode de réalisation, on propose un système de commande d'un onduleur de tension, notamment pour alimenter un moteur électrique multiphasé d'un véhicule automobile. Le système de commande comprend un moyen d'élaboration des valeurs de tensions d'alimentation de chaque phase du moteur électrique, ainsi que d'une valeur d'amplitude des tensions d'alimentation.

Le système de commande comprend en outre un moyen de détermination de collage de phase et un moyen de commande du collage de phase coopérant afin de commander l'émission à destination de l'onduleur de tension de rapports cycliques élaborés par des moyens de détermination des rapports cycliques, en fonction des valeurs de tensions d'alimentation de chaque phase du moteur électrique, ainsi que de la valeur d'amplitude des tensions d'alimentation.

On entend ici par « collage de phase », l'absence de commutation sur un bras de l'onduleur pendant une durée égale à la période de découpage ; ainsi pendant cette période on réalise un collage à 1 lorsque l'interrupteur haut du bras reste fermé, et l'interrupteur bas du bras reste ouvert ; le potentiel de la phase est fixé au point chaud du bus continu. De manière symétrique, on réalise un collage à 0 lorsque l'interrupteur bas du bras reste fermé, et l'interrupteur haut du bras reste ouvert pendant toute la période de découpage ; le potentiel de la phase est fixé au point froid du bus continu.

Le système de commande présente l'avantage de réduire les pertes par commutation dans un rapport de deux tiers.

Le moyen de détermination de collage de phase comprend des moyens de détection de phase aptes chacun à émettre un signal de tension de phase, le moyen de détermination de collage de phase étant en outre apte à émettre en sortie un signal d'identification de phase égal à celui des signaux de tension de phase dont la valeur est non nulle.

Le système de commande est ainsi plus facile à réaliser grâce à une conception modulaire.

Le moyen de commande du collage de phase est apte à émettre un signal d'activation du collage de phase en fonction de la comparaison de la valeur d'amplitude des tensions d'alimentation à un seuil d'activation de collage et à un seuil de désactivation de collage.

Le fonctionnement du système de commande est ainsi optimisé à travers le choix des seuils d'activation et de désactivation. Les seuils sont déterminés en fonction des caractéristiques de l'électronique comme par exemple la précision et la quantification des convertisseurs analogiques - numériques ou numériques analogiques.

Le système de commande comprend des commutateurs aptes à commander l'émission d'un signal parmi les signaux de rapports cycliques reçus des moyens de détermination des rapports cycliques pour chaque phase en fonction des signaux reçus du moyen de détermination de collage de phase et du moyen de commande du collage de phase.

Les moyens de détermination des rapports cycliques pour chaque phase comprennent au moins un moyen de collage au potentiel nul, apte à annuler le rapport cyclique d'une phase par addition d'une constante de décalage et à décaler les rapports cycliques des autres phases de la même constante.

Les moyens de détermination des rapports cycliques pour chaque phase peuvent comprendre au moins un moyen de collage au potentiel continu apte fixer à la valeur un le rapport cyclique d'une phase par addition d'une constante de décalage et à décaler les rapports cycliques des autres phases de la même constante.

Les moyens de détermination des rapports cycliques pour chaque phase peuvent comprendre au moins un moyen de commande scalaire apte à décaler tous les rapports cycliques par addition d'une même constante.

Ces décalages sont réalisés par simple addition ou soustraction d'une constante sur chacun des rapports cycliques, ce qui a pour effet de fixer un des trois rapports cycliques à la valeur 0 ou un des trois rapports cycliques à la valeur 1. Dans le cas ou aucune des valeurs de rapport cycliques n'est fixé à 0 ou à 1, la constante de décalage est choisie pour obtenir des rapports cycliques entre 0 et 1.

Les moyens de détermination des rapports cycliques pour chaque phase peuvent comprendre autant de moyens de collage au potentiel nul et de moyens de collage au potentiel continu que de phases du moteur électrique multiphasé.

D'autres buts, caractéristiques et avantages apparaîtront à la lecture de la description suivante donnée uniquement en tant qu'exemple non limitatif et faite en référence aux dessins annexés sur lesquels :

- la figure 1 illustre les principaux éléments d'un moyen de commande d'un onduleur de tension et l'onduleur de tension correspondant,
- la figure 2 illustre les principaux éléments d'un moyen de calcul des rapports cycliques,
- la figure 3 illustre les principaux éléments d'un système de commande d'un onduleur de tension,
- la figure 4 illustre un moyen de détermination de collage de phase,
- la figure 5 illustre la structure commune à chacun des moyens de détection de phase,
- la figure 6 illustre les principaux éléments d'un moyen de commande du collage de phase,
- la figure 7 illustre les principaux éléments d'un moyen de commande scalaire,
- la figure 8 illustre les principaux éléments d'un moyen de collage au potentiel continu, et
- la figure 9 illustre les principaux éléments d'un moyen de collage au potentiel nul.

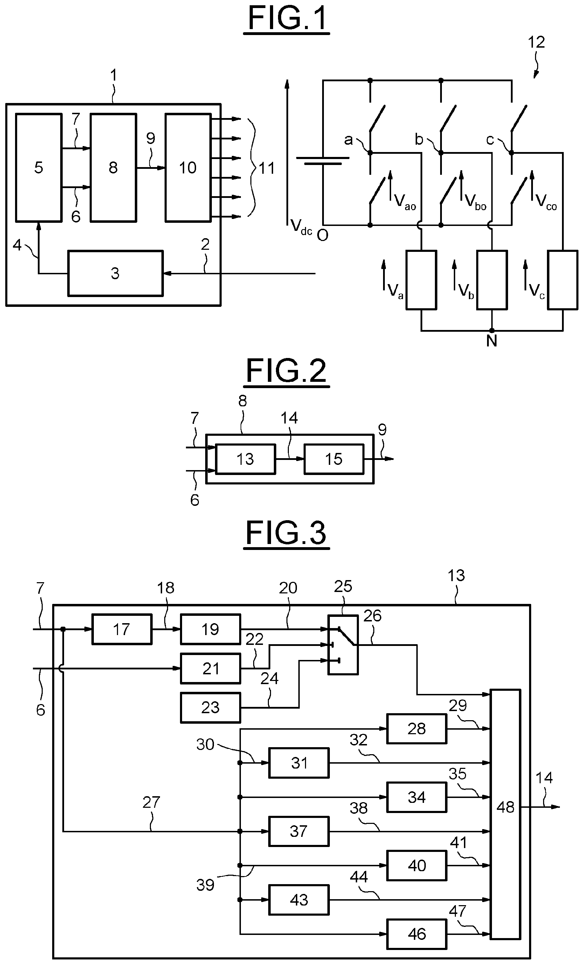

Sur la figure 1, on peut voir un onduleur de tension 12 commandé par un moyen de commande 1. Le moyen de commande 1 comprend un moyen de mesure 3 relié à des capteurs par la connexion 2. Le moyen de mesure 3 est apte à déterminer les paramètres physiques de fonctionnement du moteur tels que le courant d'alimentation des phases du moteur et l'angle entre les phases.

Le moyen de mesure 3 communique ces valeurs à un moyen de contrôle des courants 5 par la connexion 4. Le moyen de contrôle des courants 5 détermine de nouvelles consignes de tension en fonction des mesures reçues.

Ces consignes de tension sont notées (Van, Vbn, Vcn) dans la suite du document. Ces nouvelles consignes comprennent les tensions d'alimentation de chaque phase du moteur en valeur réduite notées (Va, Vb, Vc) ainsi que l'amplitude de ces tensions, notée Mod_Vdq. Un moyen de calcul des rapports cycliques 8 reçoit les tensions d'alimentation de chaque phase par la connexion 7 et l'amplitude des tension Mod_Vdq par la connexion 6. Le moyen de calcul des rapports cycliques 8 émet les rapports cycliques RCa, RCb et RCc pour chaque phase du moteur par la connexion 9 à destination d'un moyen 10 de génération des signaux modulés en largeur d'impulsion. Le moyen 10 de génération émet des signaux modulés en largeur d'impulsion à destination de l'onduleur en fonction des rapports cycliques reçus.

Les tensions (Vao, Vbo, Vco) en sortie de l'onduleur sont reliées aux rapports cycliques (RCa, RCb, RCc) appliqués sur chaque bras (a,b,c) et à la tension du bus continue Vdc alimentant l'onduleur, par les équations suivantes :

$$Vao = RCa * Vdc$$

$$Vbo = RCb * Vdc$$

$$Vco = RCc * Vdc$$

Par la suite, on travaillera avec les valeurs réduites suivantes :

$$Va = Van/Vdc$$

$$Vb = Vbn/Vdc$$

$$Vc = Vcn/Vdc$$

On note Vabc le vecteur de dimension trois contenant les trois signaux {Va, Vb, Vc}. On note RCabc le vecteur de dimension trois contenant les trois signaux {RCa, RCb, RCc}.

On note Mod_Vdq la norme de la somme vectorielle des trois signaux {Va,Vb, Vc}.

Les signaux Vabc et Mod_Vdq sont envoyés par le moyen d'asservissement 5 des courants dans le système électrotechnique alimenté. Classiquement, le système alimenté peut être un moteur électrique ou un convertisseur statique. Les signaux RCabc sont envoyés au module électronique 10 chargé de piloter le pont de puissance de l'onduleur de tension en transformant les rapports cycliques en signaux logiques destinés à chacun des six interrupteurs du pont de puissance.

Sur la figure 2, on peut voir les principaux éléments d'un moyen de calcul des rapports cycliques 8 comme un système de commande 13 et un module de filtrage 15. Le système de commande 13 est relié en entrée aux connexions 7 et 6, et en sortie à un module de filtrage 15 par la connexion 14. Le module de filtrage 15 est relié en sortie à la connexion 9.

Le module de filtrage 15 permet de prendre en compte la distorsion due au temps mort et aux temps de commutation. Le module de filtrage 15 interdit les valeurs de rapports cycliques proches de zéro et de un. Pour cela, on définit un paramètre $\alpha_{min}$ qui définit le rapport cyclique minimal et de manière symétrique, le rapport cyclique maximal ($1-\alpha_{min}$). Le paramètre $\alpha_{min}$ est fixé de sorte que la durée correspondante aux rapports cycliques écartés (entre 0 et $\alpha_{min}$) soit égale à la durée de commutation des transistors de l'onduleur de tension. Par exemple, pour une fréquence de découpage de 20 kHz, un transistor MOS présente un temps de commutation de $3\mu s$. Un paramètre $\alpha_{min}=0.1$ correspond alors à une large minimale du signal ON du transistor de $3.5\mu s$. En écartant les rapports cycliques compris entre 0 et 0.1, on écarte les distorsions dues au temps de commutation.

Sur la figure 3, on peut voir les principaux éléments d'un système de commande d'un onduleur de tension. Parmi ces principaux éléments, un moyen de filtrage numérique 17 permet de supprimer le bruit pouvant exister sur le signal Vabc reçu en entrée. Il s'agit notamment d'un filtre passe bas d'ordre deux, de bande passante de l'ordre de 500Hz.

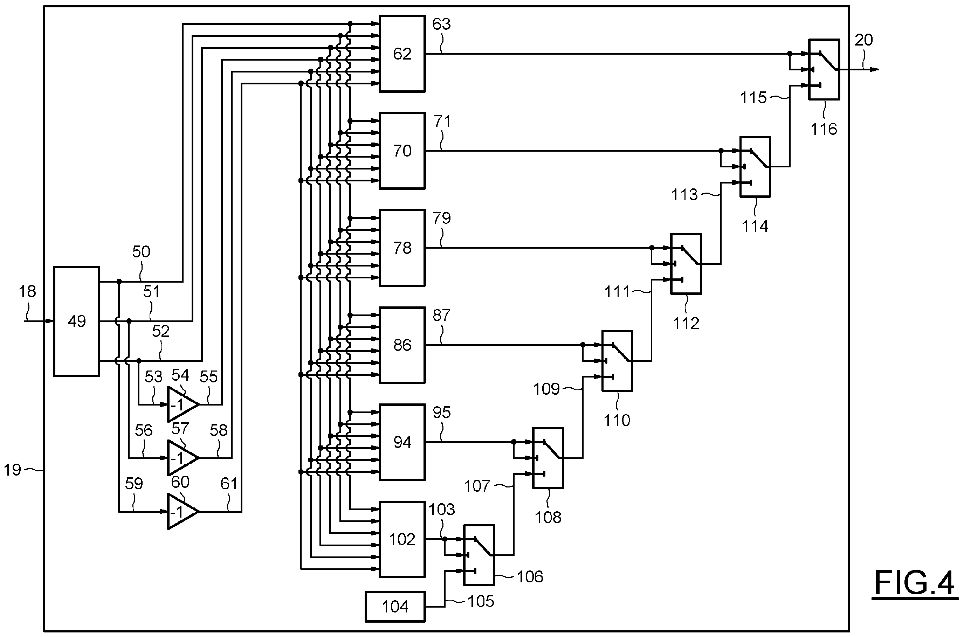

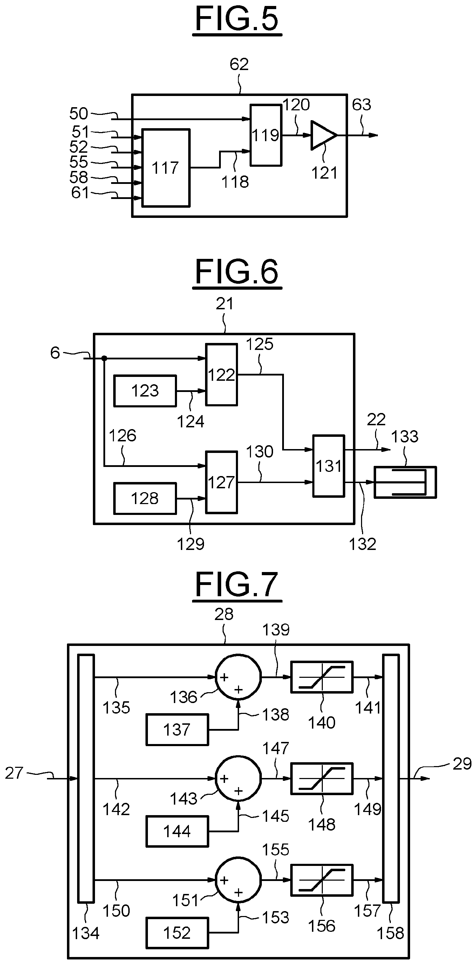

Un moyen de détermination de collage de phase 19 est relié au moyen de filtrage numérique 17 par la connexion 18. Le moyen de détermination de collage de phase 19 permet d'élaborer un signal de phase en fonction du signal filtré reçu du moyen de filtrage numérique 17. Le signal de phase est limité à des valeurs discrètes entières variant de 1 à 6. Le moyen de détermination de collage de phase 19 sera plus amplement décrit lors de la description des figures 4 et 5.

Le moyen de commande du collage de phase 21 réalise l'activation ou la désactivation du collage des phases. Le moyen de commande du collage de phase 21 sera décrit plus en détail lors de la description de la figure 6.

Un premier commutateur 25 est relié par sa première entrée au moyen de détermination de collage de phase 19 par la connexion 20, par sa deuxième entrée à une mémoire 23 comprenant la valeur zéro par une connexion 24. Le premier commutateur 25 émet en sortie la valeur reçue du moyen de détermination de collage de phase 19 lorsque le signal logique reçu du moyen de commande du collage de phase 21 est égal à un. Sinon, le premier commutateur émet en sortie la valeur nulle comprise dans la mémoire 23. Le signal en sortie du premier commutateur 25 peut donc prendre les valeurs entières comprises entre zéro et six.

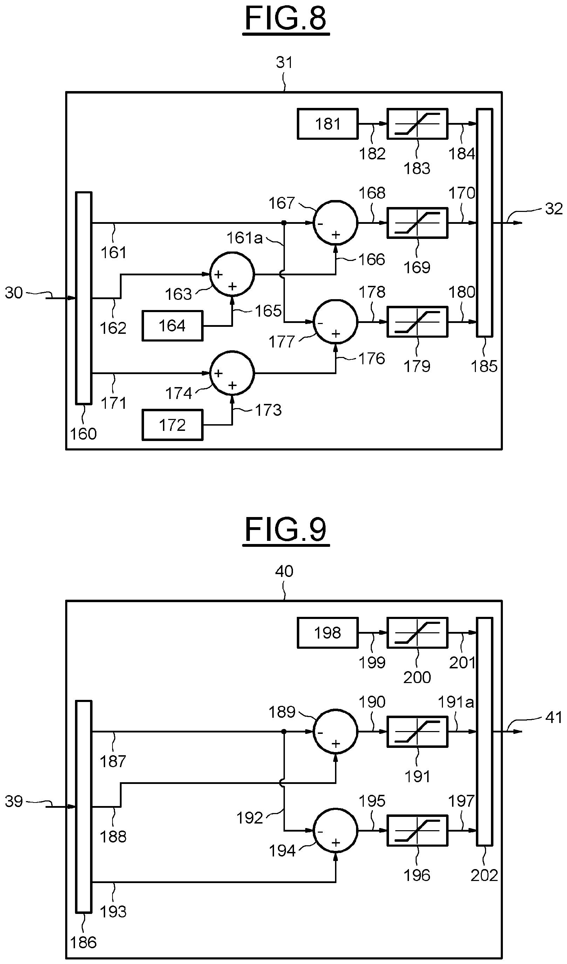

Le système de commande comprend des moyens de détermination des rapports cycliques (28, 31, 34, 37, 40, 43, 46), qui permettent de calculer les rapports cycliques dans différents cas. Un cas correspond à une commande scalaire nulle. Les autres cas correspondent au collage de phase pour les différentes valeurs prises par le signal de phase. Ces différents moyens seront décrits plus bas au cours de la description des figures 8, 9 et 10.

Les moyens de détermination des rapports cycliques (28, 31, 34, 37, 40, 43, 46) sont reliés à un deuxième commutateur 48 respectivement par des connexions (29, 32, 35, 38, 41, 44, 47). Le deuxième commutateur 48 est également relié par son entrée de commande au premier commutateur 25 par la connexion 26. Le deuxième commutateur 48 émet en sortie par la connexion 14 l'une ou l'autre des valeurs reçues des moyens de détermination des rapports cycliques (28, 31, 34, 37, 40, 43, 46) en fonction de la valeur prise par le signal reçu du premier commutateur 25. Le signal émis par le premier commutateur 25 peut prendre des valeurs comprises entre zéro et six.

Le moyen de détermination de collage de phase 19, illustré sur la figure 4, permet d'élaborer un signal de phase discret en fonction des valeurs filtrées {Va, Vb, Vc} reçues du moyen de filtrage numérique 17. Les valeurs filtrées {Va, Vb, Vc} peuvent être reçues sous forme vectorielle ou sous forme multiplexée. Il peut alors être nécessaire de procéder à une extraction de valeurs scalaires ou à un démultiplexage afin d'obtenir les valeurs Va, Vb et Vc par un moyen de démultiplexage 49.

Les valeurs Va, Vb et Vc sont émises à destination de moyens de détection de phase (62, 70, 78, 86, 94, 102). Des multiplicateurs (54, 57, 60) sont reliés par des dérivations (53,56,59) à chacune des connexions (50,51,52) portant les valeurs Va, Vb et Vc afin de générer des valeurs opposées -Va, -Vb et -Vb. Les valeurs opposées -Va, -Vb et -Vb sont transmises aux moyens de détection de phase (62, 70, 78, 86, 94, 102) par des connexions (55, 58, 61). Chaque moyen de détection de phase (62, 70, 78, 86, 94, 102) émet en sortie une valeur correspondant soit à une entier compris entre un et six soit à la valeur zéro.

Chaque moyen de détection de phase (62, 70, 78, 86, 94,102) est relié en sortie à un commutateur (116, 114, 112, 110, 108, 106). Un commutateur comprend une première entrée, une deuxième entrée et une entrée de commande qui permet de choisir laquelle des deux entrées est connectée à la sortie.

Un moyen de détection de phase (62, 70, 78, 86, 94, 102) est relié par sa sortie à la première entrée et à l'entrée de commande du commutateur (106, 108, 110, 112, 114, 116) lui correspondant. La deuxième entrée du commutateur est reliée à la sortie du commutateur précédent. La sortie du commutateur est reliée à la deuxième entrée du commutateur suivant.

Le n-ieme commutateur est relié au (n-1)-ieme commutateur par sa deuxième entrée et au (n+1)-ieme commutateur par sa sortie. La deuxième entrée du troisième commutateur 106 est reliée par la connexion 105 à une mémoire 104 comprenant la valeur zéro. La sortie du huitième commutateur 116 est reliée à la sortie 20 du moyen de détermination de collage de phase 19.

Ainsi, le troisième commutateur 106 émet en sortie la valeur reçue du moyen de détection de phase 102 si la valeur reçue est non nulle, sinon la valeur zéro comprise dans la mémoire 104 est émise.

Le quatrième commutateur 108 émet en sortie la valeur reçue du moyen de détection de phase 94 si la valeur reçue est non nulle, sinon la valeur reçue du troisième commutateur 106 est émise. Le cinquième commutateur 110, sixième commutateur 112, septième commutateur 114 et huitième commutateur 116 présentent un comportement similaire à celui du quatrième commutateur 108.

La figure 5 illustre la structure commune à chacun des moyens de détection de phase (62, 70, 78, 86, 94, 102). Un moyen de détection de phase reçoit en entrée les valeurs Va, Vb et Vc et les valeurs opposées -Va, -Vb et -Vb et émet en sortie une valeur de phase.

Un moyen de détection de phase comprend un premier comparateur 117 recevant en entrée cinq des valeurs reçues en entrée, et émettant en sortie la valeur maximale parmi les valeurs reçues en entrée. La sortie du premier comparateur 117 est reliée par une connexion 118 à une entrée d'un deuxième comparateur 119 recevant par ailleurs la sixième valeur reçue en entrée du moyen de détection de phase. Le deuxième comparateur 119 émet en sortie une valeur égale à l'unité si la sixième valeur est supérieure à la valeur provenant du premier comparateur 117, sinon une valeur nulle est émise. La valeur issue du deuxième comparateur 119 est reçue par un multiplicateur 121 par la connexion 120. La sortie du multiplicateur 121 correspond à la sortie 63 du moyen de détection de phase.

Le premier moyen de détection de phase 62 reçoit comme sixième valeur la valeur Va et applique un gain égal à un lors du traitement du signal par le multiplicateur 121.

Le deuxième moyen de détection de phase 70 reçoit comme sixième valeur la valeur Vb et applique un gain égal à deux lors du traitement du signal par le multiplicateur 121.

Le troisième moyen de détection de phase 78 reçoit comme sixième valeur la valeur Vc et applique un gain égal à trois lors du traitement du signal par le multiplicateur 121.

Le quatrième moyen de détection de phase 86 reçoit comme sixième valeur la valeur -Va et applique un gain égal à quatre lors du traitement du signal par le multiplicateur 121.

Le cinquième moyen de détection de phase 94 reçoit comme sixième valeur la valeur -Vb et applique un gain égal à cinq lors du traitement du signal par le multiplicateur 121.

Le sixième moyen de détection de phase 102 reçoit comme sixième valeur la valeur -Vc et applique un gain égal à six lors du traitement du signal par le multiplicateur 121.

Il apparaît ainsi que la valeur émise par chacun des moyens de détection de phase (62, 70, 78, 86, 94, 102) correspond aux entiers compris entre un et six. Ces valeurs sont traitées par la chaîne de commutateurs décrits plus haut en regard de la figure 4. Au sein de chaque comparateur, si la valeur de la première entrée est non nulle, la première entrée est reliée à la sortie, sinon la deuxième entrée est reliée à la sortie. La valeur de phase émise en sortie du moyen de détermination de collage de phase 19 correspondant à la sortie de la chaîne de commutateurs peut prendre une valeur entière comprise entre zéro et six, comme cela a été décrit en introduction.

Le moyen de commande du collage de phase 21, illustré par la figure 6, reçoit en entrée le signal Mod_Vdq correspondant à l'amplitude des trois signaux {Va, Vb, Vc}. Le moyen de commande du collage de phase 21 émet en sortie la valeur logique Act_Col pouvant prendre une valeur nulle ou une valeur égale à l'unité.

Un troisième comparateur 122 compris dans le moyen de commande du collage de phase 21 détermine si la valeur Mod_Vdq reçue en entrée par une connexion 6 est supérieure ou égale à une valeur de seuil d'activation de collage comprise dans une première mémoire 123 et reçue par une connexion 124.

Un quatrième comparateur 127 compris dans le moyen de commande du collage de phase 21 détermine si la valeur Mod_Vdq reçue en entrée par une dérivation 126 de la connexion 6 est strictement inférieure à une valeur de seuil de désactivation de collage comprise dans une deuxième mémoire 128 et reçue par une connexion 129.

Les valeurs d'activation du collage et de désactivation du collage sont choisies en fonction de l'amplitude Mod_Vdq. On pourra choisir par exemple la valeur 0.25 comme valeur d'activation du collage et la valeur 0.15 comme valeur de désactivation du collage.

Une bascule SR (S-R Flip-Flop en langue anglaise) 131 reçoit sur son entrée S (S pour Set en langue anglaise) par la connexion 125 la valeur émise en sortie du troisième comparateur 122. La bascule SR 131 reçoit sur son entrée R (R pour Reset en langue anglaise) par la connexion 130 la valeur émise en sortie du quatrième comparateur 127.

La bascule SR 131 comprend une sortie Q et une sortie !Q. La sortie Q est reliée à la sortie 22 du moyen de commande du collage de phase 21. La sortie !Q est reliée à un terminateur 133 par la connexion 132. Le signal émis par la sortie Q peut prendre une valeur nulle ou une valeur égale à l'unité en fonction des valeurs reçues sur les entrées S et R. La sortie Q correspond à la valeur Act_Col décrite plus haut.

La figure 7 illustre un moyen de commande scalaire 28 mentionné plus haut en regard de la figure 3. Un moyen de commande scalaire 28 reçoit en entrée la valeur Vabc par la connexion 27 et émet en sortie la valeur RCabc par la connexion 29. La valeur Vabc est transformée par un moyen de décomposition 134 en trois valeurs Va, Vb et Vc par conversion vecteur-scalaire ou par démultiplexage.

Par moyen de décomposition, on entend un moyen apte à transformer un vecteur reçu en entrée en un ou plusieurs vecteurs de dimension inférieure au vecteur reçu en entrée et à les émettre en sortie. Les vecteurs de sortie peuvent être des scalaires si la taille des vecteurs de sortie est égale à l'unité.

Un premier sommateur 136 ajoute la valeur Va reçue en entrée par la connexion 135 à la valeur d'une troisième mémoire 137 reçue en entrée par la connexion 138. La mémoire comprend une valeur égale à 0.5. La sortie du premier sommateur 136 est reliée à un premier moyen de saturation 140 par la connexion 139.

Un deuxième sommateur 143 ajoute la valeur Vb reçue en entrée par la connexion 142 à la valeur d'une quatrième mémoire 144 reçue en entrée par la connexion 145. La mémoire comprend une valeur égale à 0.5. La sortie du deuxième sommateur 143 est reliée à un deuxième moyen de saturation 148 par la connexion 147.

Un troisième sommateur 151 ajoute la valeur Vc reçue en entrée par la connexion 150 à la valeur d'une cinquième mémoire 152 reçue en entrée par la connexion 153. La mémoire comprend une valeur égale à 0.5. La sortie du troisième sommateur 151 est reliée à un troisième moyen de saturation 156 par la connexion 155.

La sortie du premier moyen de saturation 140 portant un rapport cyclique RCa, la sortie du deuxième moyen de saturation 148 portant un rapport cyclique RCb et la sortie du troisième moyen de saturation 156 portant un rapport cyclique RCc sont reliés par des connexions (141, 149, 157) à un moyen de recomposition 158, apte à générer une valeur RCabc à partir des valeurs RCa, RCb et RCc. Le moyen de recomposition 158 est relié à la sortie 29.

Par moyen de recomposition, on entend un moyen apte à transformer un ou plusieurs vecteurs reçus en entrée en un vecteur de taille supérieure à la taille des vecteurs reçus en entrée et à l'émettre en sortie. Les vecteurs d'entrée peuvent être des scalaires si la taille des vecteurs d'entrée est égale à l'unité.

Ici, la valeur RCabc est générée par le moyen de recomposition 158 à partir des trois valeurs RCa, RCb et RCc par conversion scalaire- vecteur ou par multiplexage.

La figure 8 illustre un moyen de collage au potentiel continu 31 décrit plus haut en regard de la figure 3.

Un moyen de collage au potentiel continu 31 reçoit en entrée la valeur Vabc par la connexion 30 et émet en sortie la valeur RCabc par la connexion 32. La valeur Vabc est transformée par un moyen de décomposition 160 en trois valeurs Va, Vb et Vc par conversion vecteur-scalaire ou par démultiplexage.

Un quatrième sommateur 163 compris dans le moyen de collage au potentiel continu 31 ajoute la valeur Vb reçue en entrée par la connexion 162 à la valeur égale à l'unité mémorisée dans une sixième mémoire 164 reçue en entrée par la connexion 165.

Un cinquième sommateur 174 ajoute la valeur Vc reçue en entrée par la connexion 171 à la valeur égale à l'unité mémorisée dans une septième mémoire 172 reçue en entrée par la connexion 173.

Un premier soustracteur 167 retranche la valeur Va reçue en entrée par la connexion 161 à la valeur issue du quatrième sommateur 163 reçue par la connexion 166. La sortie du premier soustracteur 167 est reliée à un quatrième moyen de saturation 169 par la connexion 168. Le quatrième moyen de saturation 169 émet en sortie une valeur RCb par la connexion 170.

Un deuxième soustracteur 177 retranche la valeur Va reçue en entrée par la dérivation 161a de la connexion 161 à la valeur issue du cinquième sommateur 174 reçue par la connexion 176. La sortie du deuxième soustracteur 177 est reliée à un cinquième moyen de saturation 179 par la connexion 178. Le cinquième moyen de saturation 179 émet en sortie une valeur RCc par la connexion 180.

Une huitième mémoire 181 contenant une valeur égale à l'unité est reliée à un sixième moyen de saturation 183 par la connexion 182. Le sixième moyen de saturation 183 émet en sortie une valeur RCa par la connexion 184.

Le quatrième moyen de saturation 169, le cinquième moyen de saturation 179 et le sixième moyen de saturation 183 sont reliés respectivement par les connexions (170,180,184) à un moyen de recomposition 185 apte à former un signal RCabc à partir des valeurs RCa, RCb et RCc.

Le deuxième moyen de collage au potentiel continu 34 et le troisième moyen de collage au potentiel continu 37 comprennent les mêmes moyens et les mêmes connexions que le premier moyen de collage au potentiel continu 31. Toutefois, le deuxième moyen de collage au potentiel continu 34 et troisième moyen de collage au potentiel continu 37 diffèrent du premier moyen de collage au potentiel continu 31 dans la mesure où les signaux Va Vb et Vc portés par les connexions (161,162,171) dans le premier moyen de collage au potentiel continu 31 portent les signaux Vb, Vc et Va dans le deuxième moyen de collage au potentiel continu 34 et les signaux Vc,Va et Vb dans le troisième moyen de collage au potentiel continu 37.

De même, les deuxième et troisième moyens de collage au potentiel continu diffèrent du premier moyen de collage au potentiel continu 31 dans la mesure où les signaux RCa, RCb et RCc portés par les connexions (184, 170, 180) dans le premier moyen de collage au potentiel continu 31 portent les signaux RCb, RCc et RCa dans le deuxième moyen de collage au potentiel continu 34 et les signaux RCc, RCa et RCb dans le troisième moyen de collage au potentiel continu 37.

La figure 9 illustre un moyen de collage au potentiel nul. Un premier moyen de collage au potentiel nul 40 reçoit en entrée la valeur Vabc par la connexion 39 et émet en sortie la valeur RCabc par la connexion 41. La valeur Vabc est transformée par un moyen de décomposition 186 en trois valeurs Va, Vb et Vc par conversion vecteur-scalaire ou par démultiplexage.

Un troisième soustracteur 189 retranche la valeur Vc reçue de la connexion 187 à la valeur Va reçue de la connexion 188. Le troisième soustracteur 189 est relié en sortie à un septième moyen de saturation 191 par la connexion 190. Le septième moyen de saturation 191 émet en sortie une valeur RCa par la connexion 191a. Le quatrième soustracteur 194 retranche la valeur Vc reçue de la dérivation 192 de la connexion 187 à la valeur Vb reçue de la connexion 193. Le quatrième soustracteur 194 est relié en sortie à un huitième moyen de saturation 196 par la connexion 195. Le huitième moyen de saturation 196 émet en sortie une valeur RCb par la connexion 197. Une neuvième mémoire 198 contenant une valeur nulle est reliée à un neuvième moyen de saturation 200 par la connexion 199. Le neuvième moyen de saturation 200 émet en sortie une valeur RCc par la connexion 201.

Les différents moyens de saturation limitent l'amplitude des signaux reçus en entrée à des valeurs comprises entre zéro et l'unité. En cas de dépassement de ces valeurs, un écrêtage a lieu.

Le deuxième moyen de collage au potentiel nul 43 et le troisième moyen de collage au potentiel nul 46 comprennent les mêmes moyens et les mêmes connexions que le premier moyen de collage au potentiel nul 40. Toutefois, le deuxième moyen de collage au potentiel nul 43 et le troisième moyen de collage au potentiel nul 46 diffèrent du premier moyen de collage au potentiel nul 40 dans la mesure où les signaux Va, Vb et Vc portés par les connexions (188,193,187) dans le premier moyen de collage au potentiel nul 40 portent les signaux Vb, Vc et Va dans le deuxième moyen de collage au potentiel nul 43 et les signaux Vc,Va et Vb dans le troisième moyen de collage au potentiel nul 46. De même, le deuxième moyen de collage au potentiel nul 43 et le troisième moyen de collage au potentiel nul 46 diffèrent du premier moyen de collage au potentiel nul 40 dans la mesure où les signaux RCa, RCb et RCc portés par les connexions (191a,197,201) dans le premier moyen de collage au potentiel nul 40 portent les signaux RCb, RCc et RCa dans le deuxième moyen de collage au potentiel nul 43 et les signaux RCc, RCa et RCb dans le troisième moyen de collage au potentiel nul 46.

Le système de commande permet de réduire drastiquement les pertes par commutation. Il permet également un pilotage simple ne dépendant que des deux seuils d'activation du collage de phase. Enfin, le système de commande tient compte des temps de commutation et temps mort des transistors de l'onduleur de tension afin de limiter les distorsions des tensions générées alimentant le moteur électrique.

Le procédé de commande d'un onduleur de tension, notamment pour alimenter un moteur électrique multiphasé d'un véhicule automobile comprend une étape d'élaboration des valeurs de tensions d'alimentation de chaque phase du moteur électrique, ainsi que d'une valeur d'amplitude des tensions d'alimentation.

On détermine des rapports cycliques élaborés en fonction des valeurs de tensions d'alimentation de chaque phase du moteur électrique, ainsi que de la valeur d'amplitude des tensions d'alimentation. On détermine ensuite un collage de phase suivi d'une étape de commande du collage de phase. On commande finalement l'émission des rapports cycliques élaborés à destination de l'onduleur de tension.

**Revendications**

1. Système de commande d'un onduleur de tension (12), pour alimenter un moteur électrique multiphasé notamment d'un véhicule automobile, comprenant un moyen d'élaboration (1) des valeurs de tensions d'alimentation de chaque phase du moteur électrique, ainsi que d'une valeur d'amplitude des tensions d'alimentation,
comprenant un moyen de détermination de collage de phase (19) et un moyen de commande du collage de phase (21) coopérant ensemble afin de commander l'émission à destination de l'onduleur de tension (12) de rapports cycliques élaborés par des moyens de détermination des rapports cycliques (28, 31, 34, 37, 40, 43, 46), en fonction des valeurs de tensions d'alimentation de chaque phase du moteur électrique, ainsi que de la valeur d'amplitude des tensions d'alimentation,
le moyen de détermination de collage de phase (19) comprenant des moyens de détection de phase (62, 70, 78, 86, 94, 102) aptes chacun à émettre un signal de tension de phase, le moyen de détermination de collage de phase (19) étant en outre apte à émettre en sortie un signal d'identification de phase égal à celui des signaux de tension de phase dont la valeur est non nulle,

et le moyen de commande du collage de phase (21) étant apte à émettre un signal d'activation du collage de phase en fonction de la comparaison de la valeur d'amplitude des tensions d'alimentation à un seuil d'activation de collage et à un seuil de désactivation de collage,

le système de commande comprenant des commutateurs aptes à commander l'émission d'un signal parmi les signaux de rapports cycliques reçus des moyens de détermination des rapports cycliques (28,31,34,37,40,43,46) pour chaque phase en fonction des signaux reçus du moyen de détermination de collage de phase (19) et du moyen de commande du collage de phase (21),

le système de commande étant **caractérisé en ce que** les moyens de détermination des rapports cycliques (28, 31, 34, 37, 40, 43, 46) pour chaque phase comprennent au moins un moyen de collage au potentiel nul, apte à annuler le rapport cyclique d'une phase par addition d'une constante de décalage et à décaler les rapports cycliques des autres phases de la même constante.

2. Système de commande selon la revendication 1, dans lequel les moyens de détermination des rapports cycliques (28, 31, 34, 37, 40, 43, 46) pour chaque phase comprennent au moins un moyen de collage au potentiel continu apte à fixer à la valeur un le rapport cyclique d'une phase par addition d'une constante de décalage et à décaler les rapports cycliques des autres phases de la même constante.

3. Système de commande selon la revendication 1 ou 2, dans lequel les moyens de détermination des rapports cycliques (28, 31, 34, 37, 40, 43, 46) pour chaque phase comprennent au moins un moyen de commande scalaire (28) apte à décaler tous les rapports cycliques par addition d'une même constante.

4. Système de commande selon la revendication 3, dans lequel les moyens de détermination des rapports cycliques (28, 31, 34, 37, 40, 43, 46) pour chaque phase comprennent autant de moyens de collage au potentiel nul et de moyens de collage au potentiel continu que de phases du moteur électrique multiphasé.

**Patentansprüche**

1. System zur Steuerung eines Spannungswechselrichters (12) für die Stromversorgung eines mehrphasigen Elektromotors insbesondere eines Kraftfahrzeugs, welches ein Mittel zur Ermittlung (1) der Werte von Speisespannungen jeder Phase des Elektromotors sowie eines Amplitudenwertes der Speisespannungen umfasst,

welches ein Mittel zur Bestimmung einer Phasenbindung (19) und ein Mittel zur Steuerung der Phasenbindung (21) umfasst, die zusammenwirken, um das Senden von Tastverhältnissen, die von Mitteln zur Bestimmung der Tastverhältnisse (28, 31, 34, 37, 40, 43, 46) in Abhängigkeit von den Werten der Speisespannungen jeder Phase des Elektromotors sowie von dem Amplitudenwert der Speisespannungen ermittelt wurden, an den Spannungswechselrichter (12) zu steuern,

wobei das Mittel zur Bestimmung einer Phasenbindung (19) Mittel zur Phasendetektion (62, 70, 78, 86, 94, 102) umfasst, die jeweils geeignet sind, ein Phasenspannungssignal auszugeben, wobei das Mittel zur Bestimmung einer Phasenbindung (19) außerdem geeignet ist, am Ausgang ein Phasenidentifikationssignal auszugeben, das gleich demjenigen der Phasenspannungssignale ist, deren Wert von null verschieden ist,

wobei das Mittel zur Steuerung der Phasenbindung (21) geeignet ist, ein Signal zur Aktivierung der Phasenbindung in Abhängigkeit von dem Vergleich des Amplitudenwertes der Speisespannungen mit einem Schwellenwert der Aktivierung der Bindung und mit einem Schwellenwert der Deaktivierung der Bindung auszugeben,

wobei das System zur Steuerung Umschalter umfasst, die geeignet sind, das Ausgeben eines Signals von den Signalen von Tastverhältnissen, die von den Mitteln zur Bestimmung der Tastverhältnisse (28, 31, 34, 37, 40, 43, 46) empfangen wurden, für jede Phase in Abhängigkeit von den Signalen, die von dem Mittel zur Bestimmung einer Phasenbindung (19) und dem Mittel zur Steuerung der Phasenbindung (21) empfangen wurden, zu steuern,

wobei das System zur Steuerung **dadurch gekennzeichnet ist, dass** die Mittel zur Bestimmung der Tastverhältnisse (28, 31, 34, 37, 40, 43, 46) für jede Phase wenigstens ein Mittel zur Bindung an das Potential Null umfassen, das geeignet ist, das Tastverhältnis einer Phase durch Addition einer Verschiebungskonstanten auf Null zu setzen und die Tastverhältnisse der anderen Phasen um dieselbe Konstante zu verschieben.

2. System zur Steuerung nach Anspruch 1, wobei die Mittel zur Bestimmung der Tastverhältnisse (28, 31, 34, 37, 40, 43, 46) für jede Phase wenigstens ein Mittel zur Bindung an das Gleichspannungspotential umfassen, das geeignet ist, das Tastverhältnis einer Phase durch Addition einer Verschiebungskonstanten auf den Wert eins zu fixieren und die Tastverhältnisse der anderen Phasen um dieselbe Konstante zu verschieben.

**3.** System zur Steuerung nach Anspruch 1 oder 2, wobei die Mittel zur Bestimmung der Tastverhältnisse (28, 31, 34, 37, 40, 43, 46) für jede Phase wenigstens ein Mittel zur skalaren Steuerung (28) umfassen, das geeignet ist, alle Tastverhältnisse durch Addition ein und derselben Konstanten zu verschieben.

**4.** System zur Steuerung nach Anspruch 3, wobei die Mittel zur Bestimmung der Tastverhältnisse (28, 31, 34, 37, 40, 43, 46) für jede Phase ebenso viele Mittel zur Bindung an das Potential Null und Mittel zur Bindung an das Gleichspannungspotential umfassen, wie Phasen des mehrphasigen Elektromotors vorhanden sind.

**Claims**

**1.** System for controlling a voltage inverter (12), for supplying power to a multiphase electric motor, notably of an automobile vehicle, comprising a means for generating (1) values of power supply voltages for each phase of the electric motor, together with an amplitude value of the power supply voltages, comprising a phase-splicing determination means (19) and a means for controlling the phase splicing (21) cooperating together in order to control the transmission to the voltage inverter (12) of duty cycles generated by means for determining the duty cycles (28, 31, 34, 37, 40, 43, 46), as a function of the values of power supply voltages for each phase of the electric motor, and also of the amplitude value of the power supply voltages, the phase-splicing determination means (19) comprising phase detection means (62, 70, 78, 86, 94, 102) each being designed to generate a phase voltage signal, the phase-splicing determination means (19) being furthermore designed to generate a phase identification signal at the output equal to that of the phase voltage signals whose value is non-zero, and the means for controlling the phase splicing (21) being designed to generate a signal for enabling the phase splicing depending on the comparison of the amplitude value of the power supply voltages with a splicing enabling threshold and with a splicing disabling threshold, the control system comprising switches designed to control the generation of a signal from amongst the duty cycle signals received from the means for determining the duty cycles (28,31,34,37,40,43,46) for each phase depending on the signals received from the phase-splicing determination means (19) and from the means for controlling the phase splicing (21), the control system being **characterized in that** the means for determining the duty cycles (28, 31, 34, 37, 40, 43, 46) for each phase comprise at least one means for holding at the zero potential, designed to cancel the duty cycle of one phase by addition of a constant shift and to shift the duty cycles of the other phases by the same constant.

**2.** Control system according to Claim 1, in which the means for determining the duty cycles (28, 31, 34, 37, 40, 43, 46) for each phase comprise at least one means for holding at the DC potential designed to fix the duty cycle of a phase at the value one by addition of a constant shift and to shift the duty cycles of the other phases by the same constant.

**3.** Control system according to Claim 1 or 2, in which the means for determining the duty cycles (28, 31, 34, 37, 40, 43, 46) for each phase comprise at least one scalar control means (28) designed to shift all the duty cycles by addition of the same constant.

**4.** Control system according to Claim 3, in which the means for determining the duty cycles (28, 31, 34, 37, 40, 43, 46) for each phase comprise as many means for holding at the zero potential and as many means for holding at the DC potential as there are phases of the multiphase electric motor.

# FIG.1

# FIG.2

# FIG.3

FIG.4

# FIG.5

# FIG.6

# FIG.7

## FIG.8

## FIG.9

**EP 2 659 579 B1**

## RÉFÉRENCES CITÉES DANS LA DESCRIPTION

### Documents brevets cités dans la description

- US 20090179608 A
- US 20100079192 A